Europäisches Patentamt

European Patent Office

Office européen des brevets

(11) Veröffentlichungsnummer: **0 354 486**

**A2**

(12) # EUROPÄISCHE PATENTANMELDUNG

(21) Anmeldenummer: 89114409.9

(22) Anmeldetag: 04.08.89

(51) Int. Cl.⁴ **G01N 27/12**

(30) Priorität: 12.08.88 DE 3827426
25.02.89 DE 3905993
09.03.89 DE 3907556
30.05.89 DE 3917519
01.06.89 DE 3917853
08.06.89 DE 3918684

(43) Veröffentlichungstag der Anmeldung:
**14.02.90 Patentblatt 90/07**

(84) Benannte Vertragsstaaten:
**AT BE CH DE ES FR GB GR IT LI LU NL SE**

(71) Anmelder: **E.T.R. ELEKTRONIK TECHNOLOGIE RUMP GMBH**
**Heinrich-Hertz-Strasse 2**
**D-4600 Dortmund 50(DE)**

(72) Erfinder: **Rump, Hanns**
**Biesenkamp 24**
**D-4750 Unna-Massen(DE)**
Erfinder: **Bargmann, Wolf-Dieter**
**Gneisenaustrasse 101**
**D-4330 Mühlheim(DE)**
Erfinder: **Grosskurth, Norbert, Dr. Ing.**
**Hagebuttenweg 23**
**D-4600 Dortmund 41(DE)**
Erfinder: **Jordan, Jens, Dr. rer. nat.**
**Am Iländ 7**
**D-4355 Waltrop(DE)**

(54) **Vorrichtung zur Durchführung eines Verfahrens zum Zwecke der Identifizierung und Quantifizierung unbekannter gasförmiger Substanzen.**

(57) Die Erfindung beschreibt eine Vorrichtung, welche die unterschiedliche spektrale Empfindlichkeit gegenüber Gasen an Oberflächen von Halbleiter-Sensorelementen bei fortlaufend veränderter Arbeitsfrequenz des Sensorstromkreises und/oder fortlaufend veränderter Arbeitstemperatur der Sensorelementoberfläche ausnutzt, um die Gase zu identifizieren und in verkehrsüblichen Dimensionen anzugeben.

Fig.3

EP 0 354 486 A2

# Vorrichtung zur Durchführung eines Verfahrens zum Zwecke der Identifizierung und Quantifizierung unbekannter gasförmiger Substanzen

Im Bereich der Umwelttechnik sind zunehmend Apparate und Vorrichtungen bestimmend, die das Vorhandensein von gasförmigen Verbindungen detektieren. Es wird dabei verlangt, daß diese Vorrichtungen möglichst in Echtzeit arbeiten, eine sehr hohe Verfügbarkeit und Lebensdauer haben und preislich deutlich niedriger als die bekannten Analyse-Geräte sind, um so eine massenhafte Verbreitung zu gestatten.

Es sind Sensoren für gasförmige Substanzen bekannt, die nach dem Prinzip der Brennstoffzelle arbeiten. Diese Sensoren arbeiten selektiv, gestatten also nicht nur den quantitativen Nachweis, sondern indirekt auch eine qualitative Zuordnung. Weiter sind Zinndioxid-Halbleitersensoren bekannt. Diese Sensoren detektieren alle oxidierbaren und reduzierenden Sustanzen. Dabei ist die spezifische Empfindlichkeit dieser Sensoren den einzelnen Substanzen gegenüber zwar unterschiedlich, der Erfassungsbereich ist allerdings so weit, daß man von Breitbandsensoren spricht. Diese Sensoren können im Bereich ab 0,1 ppm bei verschiedenen Substanzen erfolgreich eingesetzt werden, wenn die Quereinflüsse von Temperatur und relativer Feuchte kompensiert werden. Das Ausgangssignal des Sensors ist kein Meßwert, sondern lediglich ein Maßstab für das Vorhandensein irgendwelcher Substanzen, auf die der Sensor reagiert, wobei der Sensor summierende Eigenschaften hat.

Die hier beschriebene Erfindung hat sich zur Aufgabe gestellt, auf der Basis dieser preiswerten und robusten Sensoren eine qualifizierte Vorrichtung zu schaffen, die vorteilhaft einerseits eine Zuordnung der detektierten Substanz in einer Substanzklasse gestattet, ferner eine Aussage über die Größenordnung ihrer Konzentration gestattet.

Dabei macht sich die Erfindung die Tatsache zu eigen, daß in Abhängigkeit von zahlreichen Parametern die spektrale Empfindlichkeit einzelner Substanzen von Sensor zu Sensor höchst unterschiedlich ist.

So ist es beispielsweise auch möglich, durch Verändern der Heizleistung und damit der Oberflächentemperatur des Sensorelementes die Reaktivität der Sensoroberfläche gegenüber verschiedenen Substanzen zu verändern.

So ist z. B. die Empfindlichkeit gegenüber Wasserstoff ($H_2$) bereits bei sehr niedrigen Temperaturen sehr hoch. Dies gilt entsprechend für Substanzen mit vergleichbarer Affinität zu $SnO_2$.

Wenig reaktive Substanzen, z. B. Kohlenmonoxid, bedürfen einer relativ hohen Oberflächentemperatur des Sensorelementes.

Vereinfacht gesagt ist die Empfindlichkeit gegenüber bestimmten Substanzen bei bestimmten Temperaturen jeweils am höchsten.

Die Erfindung macht sich diese Eigenschaft wie folgt zu Nutze:

Beispielsweise ist der Luft Kohlenmonoxid beigegeben, und dieses Gemisch wird auf 2 Sensoren geleitet. Der erste Sensor arbeitet mit geringer Oberflächentemperatur, während der zweite Sensor mit hoher Oberflächentemperatur betrieben wird. Ergebnismäßig wird es so sein, daß Sensor 1 nur sehr geringen Werte anzeigt, Sensor 2 dagegen ein hohes Ausgangssignal erzeugt. Es ist gesichert, daß diese signifikanten Unterschiede typisch und reproduzierbar sind.

In der Praxis wird regelmäßig Wert darauf gelegt, die in der Anwendersituation erwarteten spezifischen Substanzen aufzufinden, in Qualität und Quantität zu erkennen und entsprechende Warnungen auszugeben. So interessieren z. B. im Bergbau die Substanzen Kohlenmonoxid und Methan, beim Auskoffern kontaminierter Böden dagegen Benzol.

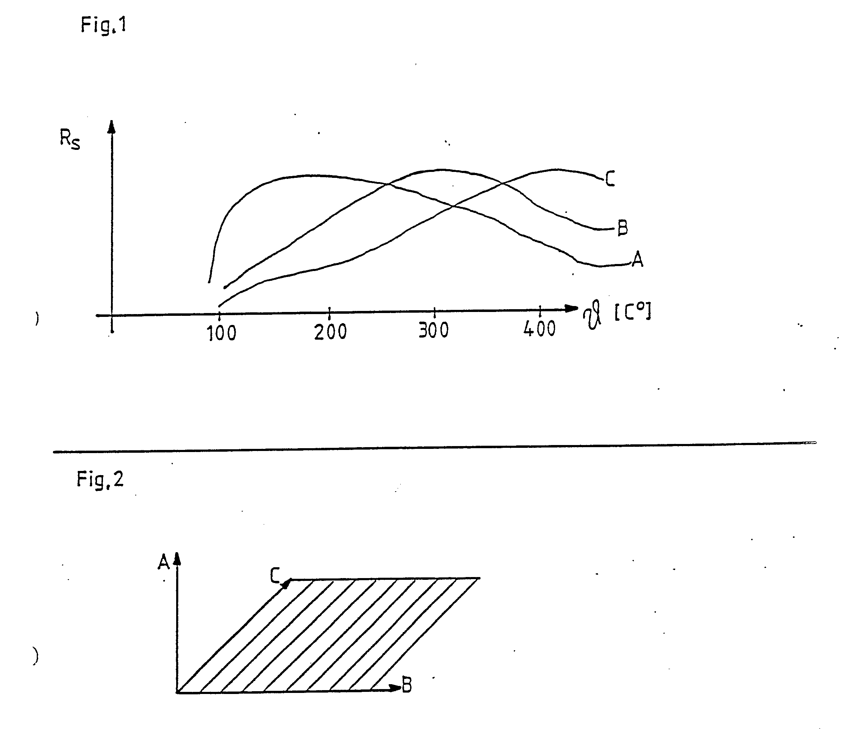

Da aufgrund der geringen Masse des Sensors die Oberflächentemperatur sehr rasch auf eine Veränderung der Heizleistung reagiert, ist es sehr leicht möglich, programmgesteuert die Heizleistung kontinuierlich zwischen einem Minimum- und Maximum-Wert zu verändern. Gleichzeitig wird das Ausgangssignal des Sensors beobach tet. Je nach Qualität der anwesenden Substanz wird bei Korrelation der Temperatur und des Sensorausgangssignals an einer bestimmten Position der Temperaturskala ein Maximum zu beobachten sein. Fig. 1 zeigt eine solche Aufnahme mit einigen typischen Substanzen, wobei Kurve A Wasserstoff ist, Kurve B Methan ist, Kurve C Kohlenmonoxid ist. Wertet man diese Ergebnisse in einem Mikroprozessor aus, dem die Zuordnung der Sensorausgangssignale und der Temperatur übertragen wird, ergibt sich eine dreidimensionale Matrix, die in Fig. 2 gezeigt wird. A ist dabei das Sensorausgangssignal, B die Sensortemperatur und C ein Korrekturfaktor, um bei spezifischen Substanzen das Sensorausgangssignal dimensionieren zu können, z. B. in ppm.

Aus dem Vorhergesagten ergibt sich, daß sich beim Durchfahren des Temperaturbereiches und bei Vorhandensein einer bestimmten Substanz eine spezifische Sensorsignalkurve ergibt, die typisch für die spezifische Substanz ist und die sich signifikant von anderen Substanzen unterscheidet. Innerhalb des Mikroprozessors sollen die Pegel an einzelnen Temperaturpunkten untereinander bewertet werden. Diese Bewertung ergibt rechnerisch eine typische Größe, die die Identifikation der Substanz erlaubt.

Vereinfacht gesagt, wird somit jeder Substanz "ein Fingerabdruck einmal abgenommen", und als Zahl im Rechenprogramm gespeichert. Mit Hilfe dieser Methode sind zahlreiche Substanzen eindeutig identifizierbar.

Da jede Substanz eine spezifische Affinität zum Sensorelement hat, muß das Sensorausgangssignal mit einer Korrekturzahl, die für die Substanz jeweils typisch ist multipliziert werden. Ergebnismäßig ist die erfindungsgemäße Vorrichtung also in der Lage

1. die unbekannte Substanz grob zu identifizieren,

2. die Konzentration in verkehrsüblichen Dimensionen innerhalb relativ kleiner Toleranzen anzugeben.

Vorteilhaft ist, daß dazu nur ein einziger Sensor benötigt wird, der als Halbleitersensor relativ preiswert ist und über eine sehr hohe Standzeit verfügt.

Vorteilhaft wird die Vorrichtung incl. Sensor **einmal** mit Meßgasen kalibriert, wobei die spezifischen Korrekturzahlen und Identifikationszahlen in einem nicht flüchtigen Speicher des Gerätes abgelegt werden. Diesen Vorgang, den man als "selbstlernende Kalibrierung und Identifizierung" bezeichnen kann, wird vorteilhaft vor Auslieferung des Gerätes an den Kunden durchführt.

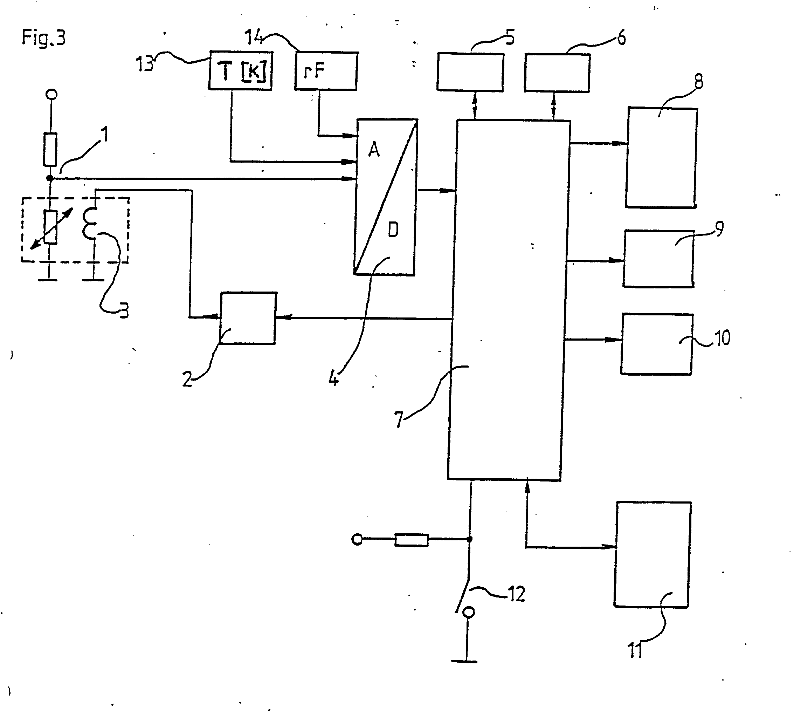

Diese Vorrichtung wird anhand der Fig. 3 erläutert.

Ein Halbleitersensorelement ist mit einem Widerstand in Reihe geschaltet und bildet einen elektrischen Spannungsteiler (1). Das Sensorelement wird dabei über eine Heizeinrichtung (3) beheizt, die über eine gesteuerte Stromquelle (2) gespeist wird. Die Stromquelle wird von einem Mikroprozessor (7) programmgesteuert. Zusätzlich werden über geeignete, technisch bekannte Sensoren die Temperatur (13) und die relative Feuchte (14) über einen Analog/Digital-Wandler (4) in den Mikroprozessor (7) eingelesen. Diese können auf einem Display (Anzeige) (8) angezeigt werden, wobei erfindungsgemäß die Quantität als auch die Qualität der detektierten Substanz angezeigt werden. Vorgesehen ist eine Protokoll-Schnittstelle, die als übliche Computer-Schnittstelle ausgelegt ist. Ein Alarmausgang (10) ist vorgesehen, um bei Überschreiten frei festgelegter Gefahrenwerte akustischen und/oder optischen Alarm zu geben. Während des "Lernvorgangs" ist über eine geeignete, technisch bekannte Schnittstelle eine Tastatur vorübergehend angeschlossen, um den "Lernvorgang" steuern zu können und um die Stoffgruppe, die im Display (Anzeige) später angezeigt werden soll, zu definieren. Die dabei anfallenden Identifikations- und Korrekturdaten werden in einem nicht flüchtigen Speicher (6), z. B. einem EEPROM, abgelegt. Über einen Testschalter (12) kann die Funktionsfähigkeit der Batterie geprüft werden und weitere relevante Funktionen können automatisch geprüft werden.

Vorteilhaft stellt diese erfindungsgemäße Vorrichtung damit ein preiswertes, einfach zu bedienendes und robustes Gerät vor, das nicht nur das Vorhandensein irgendwelcher Substanzen zu detektieren in der Lage ist, sondern gleichzeitig eine Aussage machen kann, welcher Stoffgruppe die Substanz zuzuordnen ist und welche Konzentration vorliegt.

Weiterhin ist bekannt, daß oxidierbare und reduzierbare Gase eine Leitwertänderung an der Oberfläche von Metalloxyden bewirken, weil die Substanzen mit dem im Metalloxid gebundenen Sauerstoff reagieren. Um die Reaktionsfreudigkeit zu erhöhen und um den Prozeß reversibel zu machen, wird bei einschlägigen Sensoren der Metalloxid-Leiter beheizt.

Mit unterschiedlichen Dotierungen wird bekanntlich erreicht, daß die Sensitivität des Sensorelementes verschiedenen Substanzen gegenüber unterschiedlich wird. Weiter ist bekannt, daß die Empfindlichkeit gegenüber bestimmten Substanzen auch eine Frage der Oberflächentemperatur des Sensorelementes ist.

Aus diesem Grunde ist eingangs vorgeschlagen worden, die Temperatur periodisch zu ändern und aus der temperaturabhängigen Verteilung der Ausgangssignalamplituden auf die einwirkende Substanz zu schließen. Wenn eine bestimmte Substanz detektiert werden soll, liegt es nahe, das Sensorelement auf denjenigen Temperaturpunkt einzustellen, der der höchsten Empfindlichkeit der Substanz gegenüber entspricht.

Wenn durch geeignete Schaltungsmaßnahmen, wie nachstehend vorgeschlagen, dieser Temperaturpunkt exakt eingehalten wird, kann mit dieser Methode die Querempfindlichkeit anderer Substanzen gegenüber gemindert werden.

Nachteilig ist, daß bei relativ niedrigen Arbeitstemperaturen, wie sie für manche Substanzen typisch sind, insbesondere die Regeneration nach Einwirken der Substanzen teilweise unzulässig lang ist.

Es wird daher gemäß Anspruch 4 vorgeschlagen, die Oberflächentemperatur des Sensorelementes zu verändern.

Dabei wird periodisch die Sensortemperatur auf ein relativ hohes Niveau gebracht, welches das Sensorelement jedoch nicht zerstört. In dieser Zeitspanne wird die Sensorelementoberfläche durch Reaktion mit dem Luftsauerstoff reoxidiert. Nach Ablauf dieser Zeit spanne wird die Sensorelementtemperatur gezielt auf ein Niveau gebracht, die der höchsten Sensitivität gegenüber einer bestimmten Substanz entspricht.

Es ist schaltungstechnisch also erforderlich, diese Temperatur, die man auch als optimale Reaktionstemperatur bezeichnen könnten, einstellbar zu gestalten.

Unmittelbar nach dem Sprung auf das Reaktionstemperatur-Niveau kann der Ausgangswert des Sensors noch nicht für Meßzwecke herangezogen werden, weil erst ein Gleichgewichtszustand an der Oberfläche erreicht werden muß. Nach Erreichen des Gleichgewichtszustandes kann stabil und reproduzierbar gemessen werden.

Die Dauer der Vorbereitungsphase T1 und der Meßphase T2 hängen vom jeweiligen Sensortyp ab und von den Bedingungen, unter denen der Sensor eingesetzt wird.

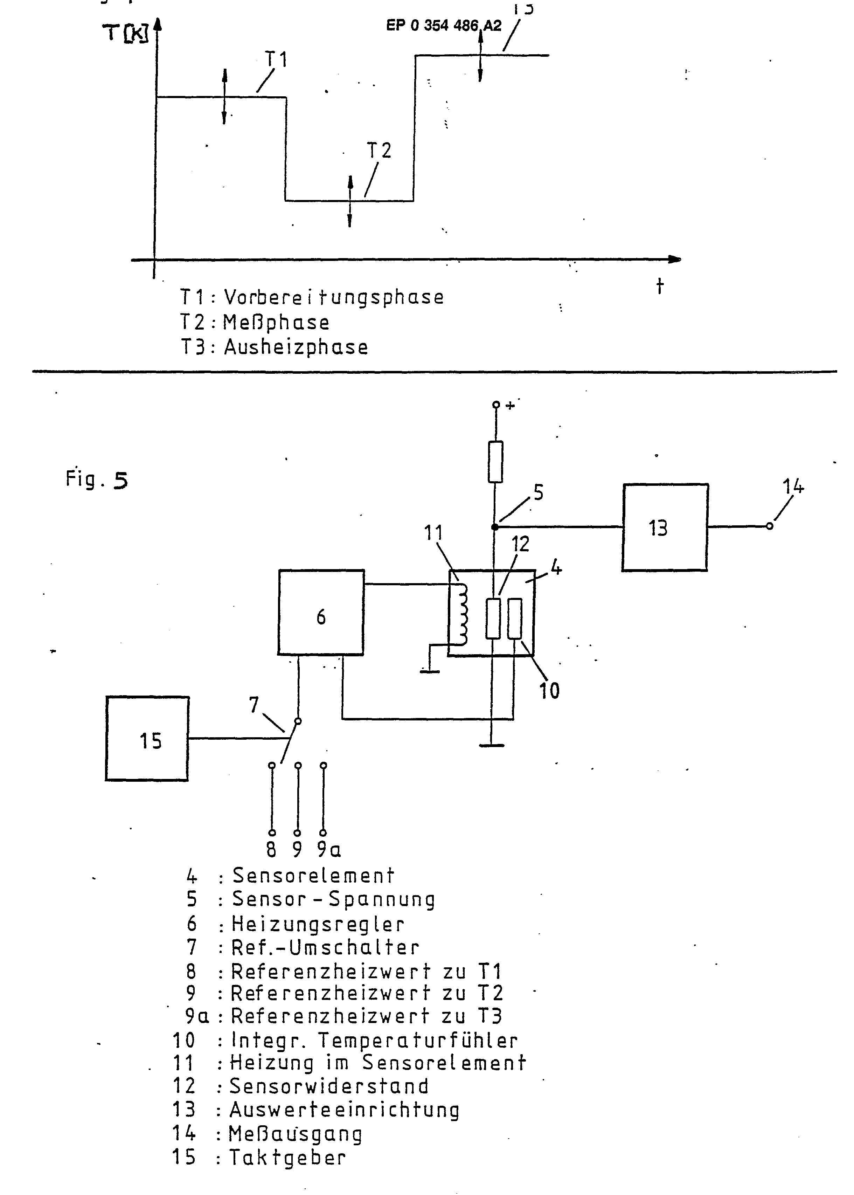

Diese erfindungsmäßige Lösung wird daher wie folgt anhand der Fig. 4 und 5 beschrieben:

Das Sensorelement besteht in der Regel aus einer Heizung (11), die wärmeleitend mit dem Metalloxid-Widerstand (12) verbunden ist. Erfindungsgemäß wird vorgeschlagen, ebenfalls ein temperaturabhängiges Widerstandselement (10) wärmeleitend mit dem Heizelement (11) zu verbinden. Die Leitfähigkeit des Metalloxid-Widerstandes (12) ist in einem Spannungsteiler oder einer Brückenschaltung so anzuordnen, daß sich ergebnismäßig eine Spannung (5) ergibt, die abhängig vom Meßgas ist. Heizelement, Metalloxid-Widerstand und temperaturabhängiger Widerstand können in einem Gehäuse zusammengefaßt werden. Sie werden im folgenden Sensorelement genannt.

Die nach einer der vorherbeschriebenen Methoden ermittelte meßgasabhängige Spannung (5), im folgenden Sensorspanung genannt, wird einer geeigneten Auswertelektronik (13) zugeführt, die ein Ausgangssignal (14) veranlaßt.

Die für den Betrieb des Heizelementes (11) erforderliche Energie wird von einem Regelbaustein (6) zur Verfügung gestellt. Im einfachsten Fall ist die Heizleistung allein eine Funktion der Heizspannung oder des Heizstroms, ohne daß es zu einem echten Regelkreis durch Temperaturvergleich kommt. In diesem Fall kann über den Eingang (7) ein Referenzwert zugeführt werden, der auf die Heizleistung/Heizspannung Einfluß hat. Wird das Sensorelement unter wechselnden Umgebungstemperaturen betrieben, ist es sinnvoll, die echte Sensorelementtemperatur zu erfassen und als Ist-Größe im Regler (6) zu verarbeiten.

Um das erfindungsgemäße Verfahren durchführen zu können, wird vorgeschlagen, den Referenzwert umschaltbar oder steuerbar zu gestalten derart, daß er einen Wert 8, 9, 9a usw. annehmen kann.

Die Umschaltung erfolgt entweder von Hand und einmalig oder automatisch und zeitgesteuert durch einen Zeittaktgeber (15).

Im letzteren Fall gilt folgender Zusammenhang:

In Luft reoxidiert die Oberfläche des Metalloxid-Sensorelementes z. B. zu reinem Zinndioxid ($SnO_2$). In Verbindung mit dem Luftsauerstoff stellt sich nach kurzer Zeit ein stabiles Gleichgewicht ein. Unter Anwesenheit von oxidierbaren Gasen, z. B. CO (Kohlenmonoxid) wird an der Oberfläche des Sensorwiderstands Zinndioxid zu Zinnsuboxiden ($SnO_{2-x}$) reduziert, wobei Sauerstoff-Atome das Kohlenmonoxid aufoxidieren. Diese Reaktion verläuft bei einer typischen Temperatur am effektivsten, so daß bei einer bestimmten, ermittelbaren Temperatur die spezifisch höchste Empfindlichkeit einem bestimmten Stoff gegenüber auftritt.

Bei einigen Stoffen ist diese Temperatur relativ niedrig, z. B. 250 °C. Ist eine Reaktion, wie vorstehend beschrieben, eingetreten und z. B. Zinndioxid zu Suboxiden reduziert worden, benötigt nach Verschwinden der oxidierbaren Substanz, im Beispiel Kohlenmonoxid, das Sensorelement eine äußerst lange Zeit, um mit dem Luftsauerstoff wieder Zinndioxid zu bilden. Das Erholungsverhalten des Sensorelementes wird bei niedrigen Sensortemperaturen äußerst träge, so daß die Meßergebnisse lange Zeit nicht verwertbar sind. Erfindungsgemäß wird vorgeschlagen, die Heiztemperatur periodisch zu verändern. Bei Beginn jeder Messung und anschließend periodisch wird das Sensorelement mit einer Temperatur T 1 betrieben, bei der eine optimale Reaktion mit dem Luftsauerstoff stattfindet. Es wird ein definierter Ausgangszustand durch Oxidation der Sensorelementoberfläche erzielt. Nach Ablauf dieser Vorbereitungsphase T1 1 wird die Heiztemperatur umgeschaltet auf eine niedrigere Temperatur T 2, die der optimalen Reaktionstemperatur der gesuchten Substanz gegenüber entspricht. In dieser Zeit kann der Meßwert (14) gewonnen und verarbeitet werden.

Nach Ablauf dieser Phase, im nachfolgenden Meßphase genannt, wird auf eine höhere Regenerationsphase T 3 (Ausheizphase) geschaltet, die gleich oder höher als T 1 sein kann.

Ergebnismäßig wird erreicht, daß in der Meßphase das Sensorelement vorteilhaft in einem Temperaturbereich betrieben wird, in dem er gegenüber ganz spezifischen Gasen besonders empfindlich ist. Die Regeneration des Sensorelementes wird beschleunigt durch den periodischen Betrieb mit Temperaturen, bei denen die Regeneration bzw. Oxidation der Sensorelementoberfläche besonders schnell abläuft.

Vorteilhaft wird daher eine eingestellte spezifische Empfindlichkeit schnell erreicht, ohne daß sich das Sensorelement besonders träge erholen muß.

In Fällen, in denen permanente Einsatzbereitschaft und schnelle Reaktion zwingend erforderlich sind, wird erfindungsgemäß vorgeschlagen, zwei Sensoren antiparallel zu betreiben, so daß stets ein Meßsignal (5) verfügbar ist.

Ferner ist bekannt, daß Metalloxid-Gassensoren bei unterschiedlichen Temperaturen eine signifikant unterschiedliche Empfindlichkeit gegenüber spezifischen Gasen haben. Die Erklärung dafür ist, daß bei bestimmten Temperaturen die Reaktivität des Metalloxides und insofern die Oxidationsbereitschaft des spezifischen Gases unter anderem eine Funktion der Oberflächentemperatur des Metalloxides ist.

Oben ist daher beschrieben worden, wie mit Hilfe dieses Effektes die zu detektierenden Gase sowohl nach Qualität als auch nach Quantität bestimmt werden können.

Dabei ist davon ausgegangen worden, daß es möglich ist, eine bestimmte Temperatur des Sensorelementes reproduzierbar zu erreichen. Es ist vorher vorgeschlagen worden, auf dem Sensorelement einen temperaturabhängigen Widerstand anzubringen, der repräsentativ die Temperatur der Sensorelementoberfläche wiedergibt.

Diese Lösung bedingt, daß spezielle Fertigungstechnologien eingesetzt werden müssen. Standardmäßig am Markt verfügbare Sensorelemente können nicht eingesetzt werden.

Daher soll eine Lösung gefunden werden, die es erlaubt, vorteilhaft auch am Markt erhältliche Sensorelemente für den vorstehend beschriebenen Zweck einsetzen zu können.

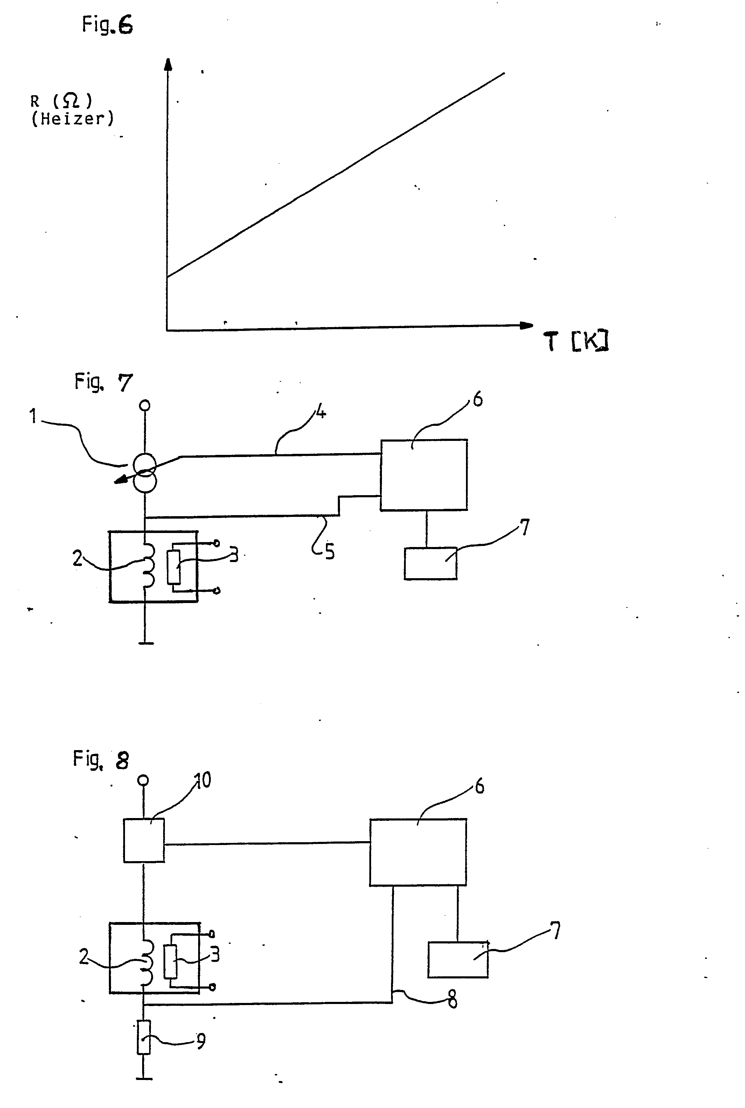

Die Lösung macht sich die Tatsache zu nutze, daß der elektrische Widerstand eines Heizelementes in der Regel temperaturabhängig ist, wobei mehrheitlich ein positiver Temperaturkoeffizient zu beobachten ist. In Fig. 6 ist z. B. das typische Verhalten eines Platin-Heizers dargestellt, wobei mit zunehmender Temperatur des Heizelementes der elektrische Widerstand des Heizelementes steigt. In der Regel ist die Funktion zwischen Temperatur und Widerstand definierbar.

Aufgrund der dichten thermischen Kopplung zwischen Heizelement und Sensorelement kann davon ausgegangen werden, daß die Temperatur des Heizelementes in einem direkten Zusammenhang mit der Temperatur des Sensorelementes steht.

Die erfindungsgemäße Lösung besteht darin, eine reproduzierbare Temperaturstabilisierung dadurch zu erreichen, daß der für die angestrebte Temperatur des Sensors relevante Heizungswiderstand aufgefunden und gehalten wird.

Die Lehre der Erfindung besteht also darin, die Heizung des Sensorelementes so auszulegen, daß der elektrische Widerstand des Heizungselementes als Ist-Größe dient.

Eine der erfindungsgemäßen Lösung nahekommende Variante ist in Fig. 7 beschrieben. Das Sensorelement (3) wird durch ein Heizelement (2) beheizt, wobei die thermische Kopplung zwischen Heizelement und Sensorelement sehr eng ist, so daß beide Temperaturen nahezu identisch sind.

Die Stromversorgung erfolgt z. B. aus einer gesteuerten Konstantstromquelle (1).

Die sich durch den Strom am Heizelement ergebende Heizspannung (5) wird einem Regler zugeführt, der bevorzugt durch einen Mikroprozessor (6) dargestellt ist. Die Soll-Größe erhält der Mikroprozessor-Regler entweder programmgesteuert oder extern eingestellt über eine Vorwahleinrichtung (7).

Da die gewünschte Größe weder Strom, noch Spannung, sondern der Widerstand ist, errechnet der Mikroprozessor aus Spannung und Strom nach dem Ohmschen Gesetz $R = U/I$ den Ohmschen Widerstand. Insofern erfolgt ein Soll/Ist-Vergleich anhand des eingegebenen Soll-Widerstandes und des ermittelten elektrischen Widerstandes des Heizers.

In Fig. 8 ist beispielhaft eine weitere Ausführung beschrieben.

Dabei wird nicht der Strom, sondern die Spannung der Heizung variiert.

Der Mikroprozessor-Regler (6) steuert eine Konstantspannungsquelle (10). Diese Spannungsquelle treibt einen Strom durch das Heizelement (2) und durch einen Serienwiderstand (9). Am Serienwiderstand wird eine Spannung (8) abgegriffen, die aufgrund der bekannten Gesetzmäßigkeiten mit dem Strom korrespondiert. Zwangsläufig ist der Strom durch den Widerstand (9) identisch mit dem Strom durch das Heizelement (2). Mit Hilfe des bekannten Ohmschen Gesetzes kann leicht der Gesamtwiderstand errechnet werden, der durch das Heizelement (2) und den Widerstand (9) fließt. Unter Berücksichtigung des bekannten Widerstandswertes (9) errechnet sich die Größe des Ohmschen Widerstandes des Heizelementes (2).

Die weitere Ausgestaltungsweise entspricht der vorstehend beschriebenen Lehre. Wesentlich ist, das die Heizleistung sich an einem vorgegebenen Widerstandswert des Heizelementes (2) orientiert, dessen temperaturabhängige Werte als Soll-Wert herangezogen werden.

Insofern ist es vorteilhaft und einfach möglich, die Temperatur eines beheizten Halbleiter-Metalloxid-Gassensors über die Heizung kontrolliert und reproduzierbar zu regeln, ohne ein zusätzliches temperaturabhängiges Element in die Sensoranordnung integrieren zu müssen.

Darüber hinaus ist es bekannt, daß verschiedene Substanzen, insbesondere Metalloxyde, z. B. Zinndioxid, den ohmschen Widerstand dann verändern, wenn gleichzeitig oxidierbare Gase, z. B. Kohlenmonoxid, vorhanden sind. Diesen Effekt machen sich zahlreiche am Markt angebotene Sensoren zunutze, wobei üblicherweise folgende Konstruktionselemente eingesetzt werden:

Der Sensor selbst besteht aus einem gesinterten Zinndioxid oder einem Zinndioxid-Dickfilm, der auf einem keramischen Träger, vorzugsweise aus Aluminium aufgebracht ist. Mitunter ist der Keramik-Träger als Röhrchen ausgebildet, wobei in dem Röhrchen ein ohmscher Widerstand als Heizer angebracht wird, der die Oberfläche des Metalloxydes auf eine Temperatur zwischen 100 °C und 500 °C erwärmen kann.

Bei anderen Konstruktionen ist auf dem Keramiksubstrat eine Heizstruktur aufgebracht, die vorzugsweise metallisch ist.

Die Herstellungsprozesse für Sensoren dieser Art haben den Nachteil, daß Schichtdicke und Schichtgeometrie relativ große Toleranzen aufweisen, was bei der technischen Anwendung zu Problemen führt.

Der nachstehend beschriebenen Lösung liegt die Aufgabe zugrunde, durch Einsatz von in der Halbleitertechnik an sich bekannten Verfahren den Herstellungsprozeß zu vereinfachen und die Toleranzen erheblich zu senken.

Ähnlich wie bei Halbleiterchips besteht auch hier der Sensorträger aus Silizium. Durch den Einsatz polykristallinen Siliziums ist es bei diesem Trägermaterial ohne weiteres möglich, jede gewünschte Form und Größenordnung einer ohmschen Heizung auszubilden.

Bei Verwendung von polykristallinem Silizium und entsprechender Kontaktierung, ist es möglich, dem Träger einen nichtmetallischen elektrischen Leiter als Heizer beizugeben. Denn bekanntlich ist polykristallines Silizium elektrisch leitfähig und erwärmt sich demnach beim Anlegen einer Spannung.

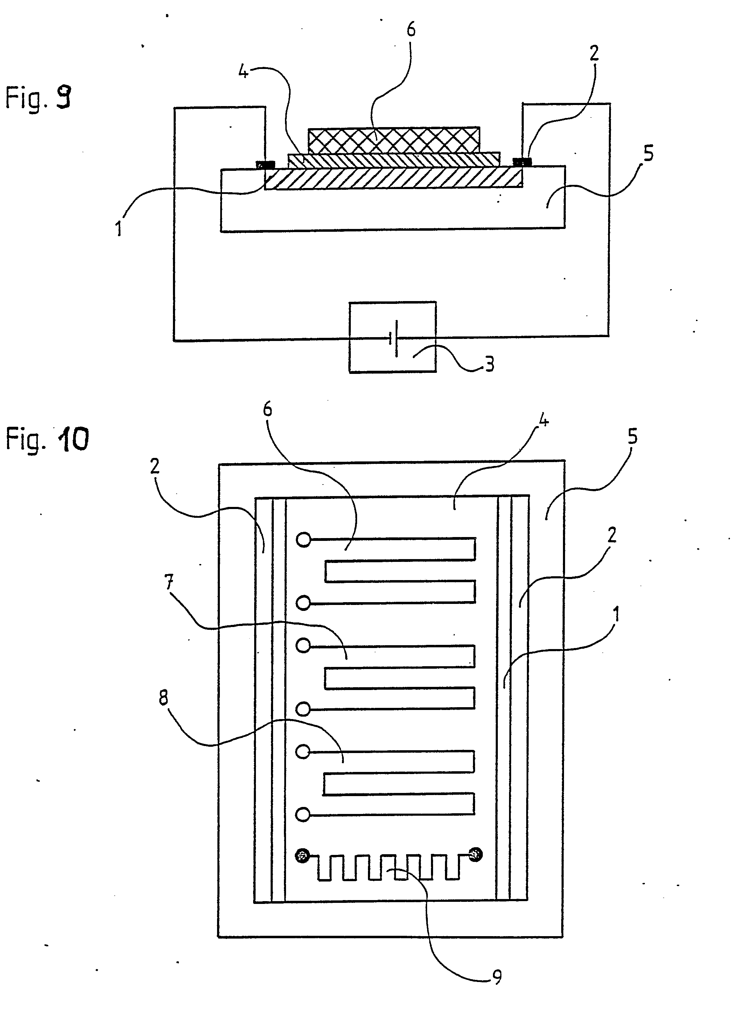

Die Fig. 9 und 10 zeigen ein Heizelement (1), was über die Kontaktierungen (2) elektrisch angeschlossen wird und über die Spannungsversorgung (3) betrieben wird. Dieses Heizelement (1) wird nunmehr nach den in der Halbleitertechnik bekannten Verfahren weiterverarbeitet und erhält zuerst eine Isolationsschicht (4) aus z. B. Siliziumdioxid. Träger der Dünnschichtelemente ist ein Siliziumsubstrat (5).

In verschiedenen Herstellungsschritten wird nunmehr eine photoempfindliche Schicht aufgebracht, die die Strukturen des eigentlichen Sensorelementes enthält. Dabei kann jede gewünschte Strukturform hergestellt werden.

Nach dem Belichten wird der Sensorgrundstoff aufgebracht. Es liegt auf der Hand, daß die mit diesem Verfahren erreichbaren Genauigkeiten dem der herkömmlichen Dickschichttechnik erheblich überlegen sind und insofern gleichmäßigere Ergebnisse bringen.

Im Prinzip kann dieser Vorgang beliebig oft wiederholt werden, wobei in den einzelnen Arbeitsschritten unterschiedliche Sensormaterialien aufgebracht werden, so daß sich z. B. die Sensorelemente (6), (7), (8) ergeben.

Wenn es notwendig ist, kann ein Temperatur-Sensorelement (9) an einem für die Temperatur repräsentativen Ort aufgebracht werden, das aus einem elektrisch leitenden und stark temperaturbeständigen Material besteht, z. B. aus Platin.

Die Fig. 9 zeigt den prinzipiellen Aufbau im Schnittbild, während Fig. 10 den prinzipiellen Aufbau in Draufsicht zeigt.

Um die Sensoreigenschaften zu verändern, wird weiter vorgeschlagen, die Eigenschaften der Sensorelemente dadurch gezielt zu beeinflussen, in dem in einem weiteren Arbeitsschritt auf das Sensorelementmaterial eine weitere Schicht bzw. weitere Schichten aufgebracht werden. Insbesondere wird vorgeschlagen, eine Katalysatorschicht aus einem katalytisch wirkenden Metall, wie z. B. Paladium, Platin, Rodium etc. aufzudampfen bzw. in geeigneter Form aufzubringen, wobei diese Schicht gasdurchlässig gestaltet ist.

Die letzte Forderung wird realisiert, in dem die aufgebrachte Schicht so dünn ist, daß Gasatome mühelos durch diese durchdiffundieren können. Auch wird vorgeschlagen, die Katalysatorschicht porös, z. B. in Form einer Netzstruktur, aufzubringen.

Wesentlich ist, daß erfindungsgemäß nicht nur die Geometrie und das Material des eigentichen Sensorelementes unterschiedlich sein kann, sondern auch die Katalysatorschicht.

Damit ist es erfindungsgemäß möglich, sehr vorteilhaft auf einem Chip eine Gruppe von Sensoren aufzubauen, wobei jedes einzelne Sensorelement spezifisch empfindlich auf unterschiedliche Gase ist. Insofern kann durch geeignete Auswertemethoden die Empfindlichkeit gegenüber einzelnen Gasen erheblich gesteigert werden bzw. sogar Selektivität erreicht werden.

Wie vorstehend beschrieben, verändern beheizte Sensorelemente aus Metalloxiden oder ähnlichen Materialien ihren inneren Widerstand dann, wenn oxidierbare oder reduzierend wirkende Gase anwesend sind.

Weiterhin ist bekannt, daß die Empfindlichkeit veschiedenen Gasen gegenüber bei bestimmten Temperaturen jeweils am größten ist.

Übliche Auswerteschaltungen arbeiten daher mit einem Spannungsteiler, der aus einem ohmschen Widerstand und dem Sensor gebildet wird. Die sich im Spannungsteiler ergebene Teilerspannung ist eine Funktion der Gaskonzentration.

Nachstehend wird beschrieben, daß der Sensor nicht mit Gleichstrom durchflossen wird, sondern mit Wechselspannung.

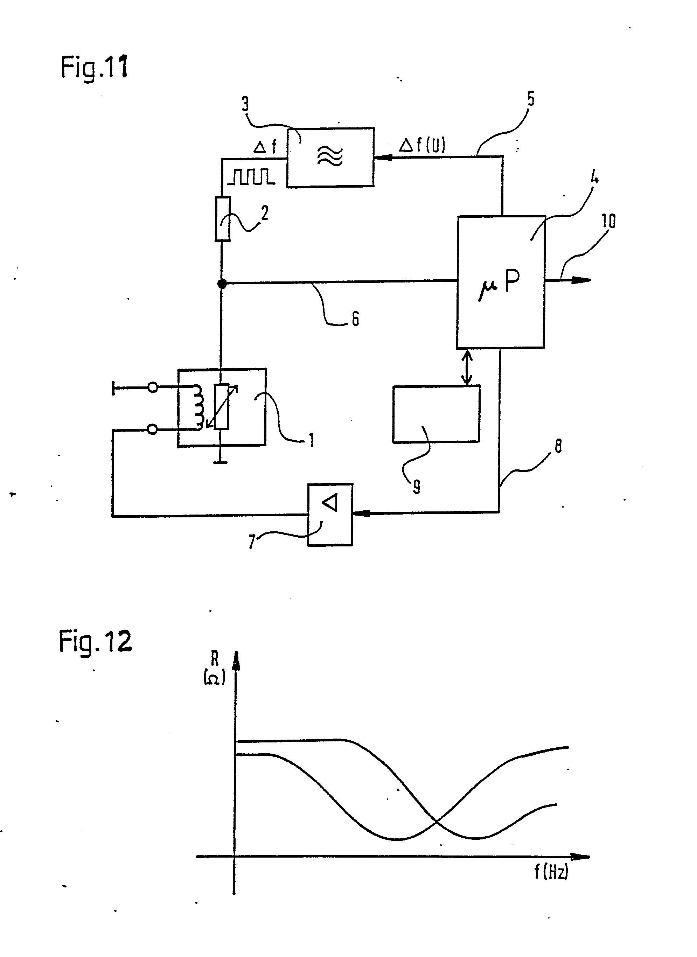

Bemerkenswert dabei ist die Tatsache, daß der mit verschiedenen Frequenzen ermittelte Sensorwiderstand nicht konstant ist, wie es bei einem ohmschen Widerstand zu erwarten wäre, sondern sich mit der Frequenz erheblich ändert. Bemerkenswert ist weiter, daß diese Änderungen nicht nur eine Funktion des jeweiligen Sensortyps ist, sondern insbesondere abhängig vom Gas ist, mit dem die Sensoroberfläche reagiert. Die Fig. 12 zeigt ein Diagramm, das die Abhängigkeit des Sensorwiderstandes bei einer gegebenen Gaskonzentration von der Frequenz zeigt. Da die Unterschiede bei den einzelnen Gasen signifikant sind, wird vorgeschlagen, diesen Effekt zur Erhöhung der Selektivität zu nutzen.

Wie oben vorgeschlagen, wird zur Auswertung die Temperatur durch einen Rechner permanent zwischen einer maximalen und minimalen Temperatur verändert. Die sich ergebenden Daten werden gespeichert und zur Identifizierung des Gases herangezogen.

Einen ähnlichen Gedanken verfolgt die weitere Ausbildung der Erfindung, wobei der erfindungsgemäße Aufbau anhand der Fig. 12 beschrieben wird:

Der Sensor (1) besteht aus einem Sensorelement und einem Heizelement. Das ist in einem Spannungsteiler mit einem ohmschen Widerstand (2) angeordnet. Der ohmsche Widerstand (2) kann auch durch eine Konstantstromquelle ersetzt werden. Der durch den Sensor fließende Strom ist ein Wechselstrom und wird im Generator (3) erzeugt. Die Frequenz des Generators wird durch ein Steuersignal (5) bestimmt, das von einem Steuergerät, z. B. einem Mikro prozessor (4), erzeugt wird. Die am Sensor entstehende Sensorspannung (6) wird vom Mikroprozessor eingelesen. Bei der Erstinbetriebnahme werden dem Sensor verschiedene Gase in bestimmten Konzentrationen zugeführt, wobei der Mikroprozessor die Frequenz des Wechselstromgenerators (3) permanent wobbelt, also zwischen einer Maximum- und einer Minimumfrequenz hin und her gleiten läßt.

Wie aus Fig. 12 ersichtlich ist, ändert sich die Sensorspannung mit der Frequenz bei bestimmten Gasen in typischer Weise. Die Sensorspannng wird daher vom Mikroprozessor eingelesen und während des Lernvorganges in einer Matrix abgelegt, die sich im Speicherbaustein (9 Fig. 11) befindet. Das Programm des Mikroprozessors ist so geschrieben, daß beim späteren Normalbetrieb die sich ergebenen Empfindlichkeitsverläufe stets mit den "gelernten" Kurven verglichen werden. Insofern ist es möglich, den Sensor nicht nur durch Einstellen auf eine bestimmte Frequenz bei bestimmten Gasen empfindlich zu machen, sondern auch einmal "gelernte" Gase wieder zu identifizieren.

In weiterer Ausgestaltung der Erfindung ist der Sensor mit einem Halbleitersensorelement, das auf einem elektrisch und thermisch isolierenden Träger aufgebracht ist und mittels einer elektrischen Heizung auf eine Betriebstemperatur aufgeheizt wird, derart aufgebaut, daß das Halbleitersensorelement selbst als Heizung ausgebildet ist.

Durch die vorteilhafte Integration der Heizung in das Halbleitersensorelement kann auf die bisherige separate Heizung verzichtet werden, so daß der Sensor insgesamt wesentlich kostengünstiger hergestellt werden kann. Durch die vorteilhafte Ausbildung des Sensors gemäß Anspruch 23 wird auf einfache Weise die gewünschte Betriebstemperatur konstant gehalten, um bei einer Reaktion mit den den Sensor umgebenden Gasen die hierdurch auftretende Reaktionswärme bzw. Temperaturdifferenz oder Leitfähigkeitsänderung des Sensorelementes als Meßgröße für die zu detektierenden Gase heranzuziehen. Hierzu ist es gemäß Anspruch 24 vorteilhaft, daß zwischen dem Sensorelement und dem Leistungsregler über eine Schaltungsverzweigung eine Auswerteeinheit geschaltet ist, die als Mikroprozessor ausgebildet sein kann.

In der nachfolgenden Beschreibung ist dieses weitere Ausführungsbeispiel anhand der Fig. 13 bis 16 näher erläutert, wobei die

Fig. 13 einen Sensor mit einem Leistungsregler, einer Auswerteeinheit und einem Sensorelement,

Fig. 14 einen Sensor mit einer gesteuerten Konstantstromquelle und Auswerteeinheit mit Mikroprozessor,

Fig. 15 das Sensorelement und

Fig. 16 eine Schnittdarstellung des Sensorelementes gemäß Fig. 14 zeigen.

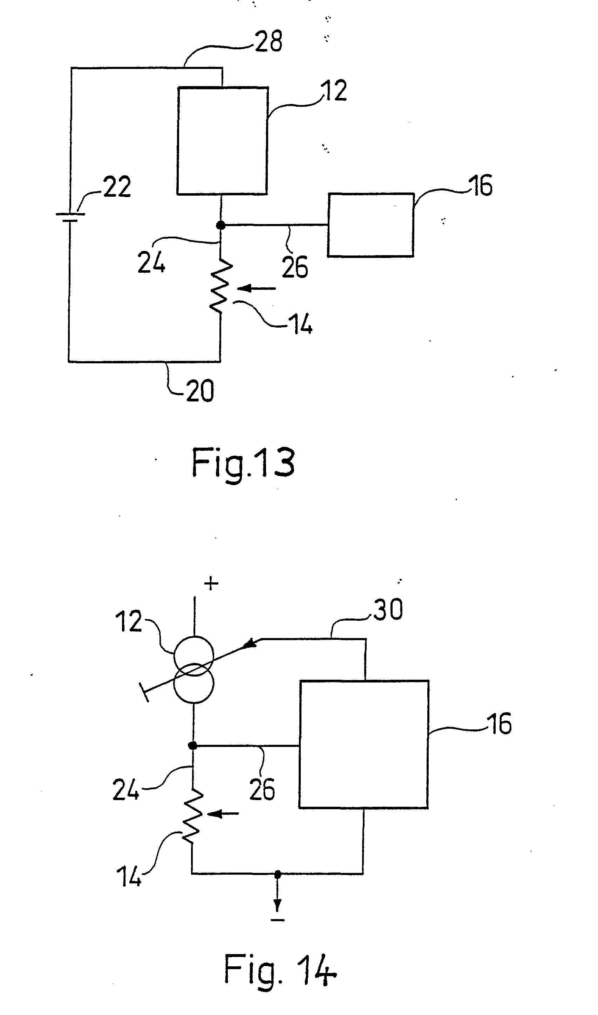

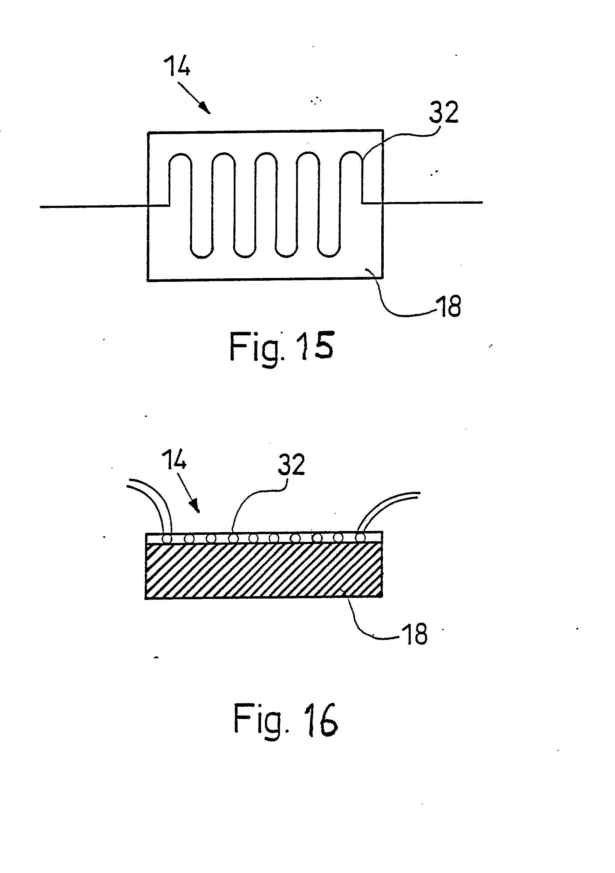

In den Fig. 13 bis 16 ist mit (10) ein Sensor bezeichnet, der aus einem Leistungsregler (12), einem Sensorelement (14) und aus einer Auswerteeinheit (16) besteht, die beispielsweise als Mikroprozessor ausgebildet sein kann. Das in den Fig. 15 und 16 dargestellte Sensorelement (14) besteht aus einem Träger 18, der z. B. aus einer oxydischen Keramik 8, beispielsweise aus $Al_2O_3$ oder aus polykristalinem Silizium mit einer elektrisch neutralen isolierenden Deckschicht aus $SiO_2$ besteht, auf den ein als Halbleiter (32) ausgebildetes Sensorelement (14) aufgebracht ist. Der Halbleiter (32) kann auf dem Träger beispielsweise aufgesintert werden. Eine andere Fertigungsmöglichkeit wäre, den Halbleiter (32) mittels Dickschichttechnik auf die Oberfläche des Trägers (18) aufzubringen.

Der Halbleiter (32) besteht aus mit katalytischen Beimengungen versehenem und elektrisch leitendem Metalloxid, wobei in vorteilhafter Weise Zinndioxid ($SnO_2$) verwendet wird.

Der in Fig. 13 dargestellte Leistungsregler (12) sowie das Sensorelement (14) ist über die elektrischen Verbindungen (20) und (28) an eine Stromquelle (22) angeschlossen. Ferner steht der Leistungsregler (12) über eine elektrische Verbindung (24) mit dem Sensorelement (14) in Verbindung (16) an die elektrische Verbindung (24) und somit an den Leistungsregler und das Sensorelement (14) angeschlossen.

Mit dieser Anordnung lassen sich die Gase auf einfache Weise detektieren. Hierzu wird an das Sensorelement (14) eine Spannung angelegt, so daß es durch den hierdurch verursachten Stromfluß zwangsläufig zu einer Erwärmung des Sensorelementes (14) kommt. Die Erwärmung ist abhängig vom Widerstand des Sensorelementes (14) und von der angelegten Spannung. Die umgesetzte Leistung errechnet sich bei konstanter Heizspannung durch die Formeln

$$P = \frac{U^2}{R} \qquad\qquad P = U \cdot I$$

Die Heizspannung U muß sich insofern in Abhängigkeit vom Widerstand R des Sensorelementes (14) ändern und damit in Abhängigkeit der das Sensorelement (14) umgebenden Gase, damit die Heizleistung P konstant wird. Würde man die Heizleistung P nicht regeln, dann würde sich die Heizleistung P in Abhängigkeit vom Widerstand R verändern.

Der Leistungsregler (12) stellt sicher, daß das Produkt aus Strom I und Spannung U, also die elektrische Leistung P, konstant bleibt. Die elektrische Leistung P wird im Sensorelement (14) umgesetzt. Die notwendige an dem Sensorelement (14) anliegende Spannung U wird ständig vom Leistungsregler (12) angepaßt, wobei regelmäßig die Spannung U dann kleiner wird, wenn aufgrund der Anwesenheit eines Gases der Sensorwiderstand R kleiner wird und der Leistungsregler (12) entsprechend reagiert. Daraus folgt, daß die Sensorspannung am Sensorelement eine Funktion der Gaskonzentration ist und in der Auswerteeinheit (16) ausgewertet werden kann.

Der Leistungsregler kann als eigene Baugruppe ausgebildet sein. Es ist besonders vorteilhaft, wenn die Leistungsregelung durch einen Mikroprozessor gleichzeitig mit der Signalauswertung durchgeführt wird, wobei der Mikroprozessor, der in die Auswerteeinheit (16) integriert werden kann, zusätzlich lediglich den Strom zu messen hat. In dem Leistungsregler (12) ist ein weiterer Mikroprozessor vorgesehen, der die entsprechenden Störgrößen verarbeitet und dafür sorgt, daß das Produkt aus Spannung U und Strom I, also die Leistung P, konstantgehalten wird.

Darüber hinaus kann auch, wie in Fig. 14 dargestellt, der Leistungsregler (12) als gesteuerte Konstantstromquelle ausgeführt werden. In dieser Ausführungsform befindet sich in der Auswerteeinheit (16) ein Mikroprozessor, der über die Verbindung (30) die Konstantstromquelle steuert.

## Ansprüche

1. Vorrichtung zur Durchführung eines Verfahrens zum Zwecke der Identifizierung und Quantifizierung unbekannter gasförmiger Substanzen, wobei ein beheizter Halbleiter-Gassensor eingesetzt wird, dadurch gekennzeichnet, daß periodisch die Heizleistung und damit die Oberflächentemperatur des Sensors zwischen einem Minimum- und Maximum-Wert verändert wird, wobei gleichzeitig das Ausgangssignal des eigentlichen Sensors über einen Analog/Digital-Wandler in einen Mikroprozessor eingelesen wird, wobei programmgesteuert die Sensorsignale an definierten Heizleistungspunkten miteinander verglichen werden, so daß sich rechnerisch eine bestimmte Zahl ergibt, die mit einer im Mikrocomputer abgelegten Zahl korreliert und identisch mit einer bestimmten Substanzgruppe ist.

2. Vorrichtung nach Anspruch 1, dadurch gekennzeichnet, daß die Identifikationszahl im Rechenprogramm einer Korrekturzahl zugeordnet ist, die die spezifische Empfindlichkeit des Sensors auf die identifizierte Stoffgruppe beinhaltet, wobei durch rechnerische Verknüpfung mit dem Sensorsignal der tatsächliche Konzentrationswert in verkehrsüblichen Dimensionen hergestellt wird.

3. Vorrichtung nach mindestens einem der vorangegangenen Ansprüche, dadurch gekennzeichnet, daß über eine geeignete Schnittstelle über eine Eingabeeinheit Konzentration und Gattungsname einer oder mehrerer Substanzen eingegeben wird, wobei der Sensor mit dieser Substanz in der angegebenen Konzentration überzogen wird und selbständig die in den vorangegangenen Ansprüchen beschriebenen Identifikations- und Korrekturzahlen errechnet und in einem unverlierbaren Speicher ablegt.

4. Vorrichtung nach mindestens einem der vorangegangenen Ansprüche, dadurch gekennzeichnet, daß die Heizleistung programmgesteuert durch Veränderung des Impuls-Pausenverhältnisses erzeugt wird.

5. Vorrichtung nach einem oder mehreren der Ansprüche 1 bis 4 zur Detektion von oxidierbaren und reduzierbaren Gasen unter Verwendung beheizter Metalloxyd-Sensorelemente, dadurch gekennzeichnet, daß die Oberflächentemperatur des Sensorelementes frei wählbar und umschaltbar eingestellt wird, wobei in einer frei wählbaren Zeit (1, Fig. 4) die Temperatur der Sensor-Oberfläche relativ höher sein kann als in der ebenfalls frei einstellbaren Meß-Zeit (2, Fig. 4) und anschließend in einer Regenerationsphase bzw. Ausheizphase (3, Fig. 4) die Temperatur frei einstellbar ist, wobei die Umstellung der Temperaturen entweder manuell oder zeitlich gesteuert automatisch durch ein Steuerwerk (15, Fig. 5) erfolgt.

6. Vorrichtung nach Anspruch 5, dadurch gekennzeichnet, daß wärmeleitend mit dem Sensor-Widerstand (12, Fig. 5) ein temperaturabhängiger Widerstand auf dem Sensorelement (4, Fig. 5) angeordnet ist, wobei die Widerstandsänderung des temperaturabhängigen Widerstands (10, Fig. 5) ausgenutzt wird, um in einer Regelschaltung (6, Fig. 5) die Temperatur des Sensorelementes (4, Fig. 5) entsprechend einem Referenzwert (7, Fig. 6) konstant zu halten.

7. Vorrichtung nach Anspruch 6, dadurch gekennzeichnet, daß der Referenzwert (7, Fig. 5) stetig oder in Stufen auf weitere Werte umgeschaltet werden kann.

8. Vorrichtung nach einem der vorangegangenen Ansprüche, dadurch gekennzeichnet, daß die Umschaltung der Referenzwerte manuell oder automatisch durch ein zeitgesteuertes Schaltwerk (15, Fig. 5) erfolgen kann.

9. Vorrichtung nach Anspruch 8, dadurch gekennzeichnet, daß das Schaltwerk ein Mikroprozessor ist.

10. Vorrichtung nach mindestens einem der vorangegangenen Ansprüche, dadurch gekennzeichnet, daß zwei oder mehr Sensoren so betrieben werden, daß mindestens ein Sensor stets oder überwiegend in einem aufgabenstellungsgemäßen Zustand zur Ermittlung von Meßwerten sich befindet, wobei die Umschaltung und die Steuerung zentral durch das Steuerwerk (15, Fig. 5), das als Mikroprozessor ausgebildet sein kann, erfolgt.

11. Vorrichtung zur Detektion verschiedener Gase mit Hilfe von beheizten Metalloxid-Sensoren nach einem oder mehreren der Ansprüche 1 bis 10, wobei die Selektivität gegenüber spezifischen Gasen durch Wahl einer spezifischen Sensortemperatur erhöht wird, dadurch gekennzeichnet, daß die Sensorheizung durch einen Regler im Sinne eines geschlossenen Regelkreises auf spezifische Temperturen eingestellt wird und als Soll-Größe der elektrische Widerstand des Heizelementes bei spezifischen Temperaturen dient, wobei als Ist-Größe der temperaturabhängige, momentane elektrische Widerstand des Heizelementes dient, der vom Regler aus Strom und Spannung des Heizelementes bestimmt wird.

12. Vorrichtung nach Anspruch 11, dadurch gekennzeichnet, daß der Regler aus einem Mikroprozessor (6, Fig. 7 und 8) besteht, der den Soll-Wert (7, Fig. 7 und 8) mit dem Quotienten der über dem Sensor gemessenen Spannung (5, Fig. 7 und 8) und den in einer vom Regler gesteuerten Stromquelle (1, Fig. 7) erzeugten Strom vergleicht und im Sinne eines geschlossenen Regelkreises den Ist-Wert dem Soll-Wert annähert.

13. Vorrichtung nach Anspruch 12, dadurch gekennzeichnet, daß der Regler aus einem Mikroprozessor (6, Fig. 7 und 8) besteht, der den Soll-Wert (7, Fig. 7 und 8) mit dem Quotienten aus der Spannung einer vom Regler (6, Fig. 7 und 8) gesteuerten Spannungsquelle (10, Fig. 7 und 8) und dem durch die Heizung (2, Fig. 7 und 8) fließenden Strom vergleicht.

14. Vorrichtung nach Anspruch 13, dadurch gekennzeichnet, daß der Strom durch die Heizung aus dem Spannungsabfall an einen im Stromkreis liegenden Widerstand (9, Fig. 7 und 8) errechnet wird.

15. Sensor für eine Vorrichtung nach einem oder mehreren der Ansprüche 1 bis 14 für die Messung und Erkennung von Gasen, wobei das gasempfindliche Element, z. B. aus gasabhängig elektrisch leitfähigen Metalloxyden oder anderen geeigneten Materialien besteht, dadurch gekennzeichnet, daß das Sensorelement als Dünnschicht thermisch gekoppelt und elektrisch isoliert auf einem ohmschen Heizelement aus polykristallinem Silizium aufgebracht ist.

16. Sensor nach Anspruch 15, dadurch gekennzeichnet, daß dieser mit einer dünnen Schicht eines als Katalysator geeigneten Materials versehen ist.

17. Sensor nach mindestens einem der vorangegangenen Ansprüche 15 und 16, dadurch gekennzeichnet, daß auf dem Träger mehrere gasempfindliche Sensorelemente aufgebracht sind, wobei die Materialien und die Struktur der Sensorelemente unterschiedlich sein können.

18. Sensor nach mindestens einem der vorangegangenen Ansprüche 15 bis 17, dadurch gekennzeichnet, daß zusätzlich zu den Gassensoren ein temperaturempfindlicher Widerstand thermisch leitend mit dem Träger verbunden ist, wobei der temperaturempfindliche Widerstand ebenfalls als Dünnschicht eines temperaturempfindlichen elektrischen Leiters aufgebracht ist.

19. Sensor nach einem oder mehreren der vorhergehenden Ansprüche, dadurch gekennzeichnet, daß das Sensorelement (1, Fig. 11) Bestandteil eines Spannungsteilers mit einem ohmschen Widerstand (2, Fig. 11) ist, wobei der durch den Spannungsteiler fließende Strom von einem Wechselspannungsgenerator (3, Fig. 11) erzeugt wird, dessen Frequenz so gewählt ist, daß die Empfindlichkeit bestimmten Gasen gegenüber jeweils maximal ist.

20. Sensor nach Anspruch 19, dadurch gekennzeichnet, daß der Wechselspannungsgenerator gesteuert von einer Steuer- und Auswerteeinheit (4, Fig. 11) in seiner Frequenz verändert werden kann, so daß automatisch oder manuell gesteuert eine Anzahl von Frequenzen eingestellt werden kann, die jeweils mit der Empfindlichkeitscharakteristik bestimmter Gase übereinstimmen.

21. Sensor nach Anspruch 19 oder 20, dadurch gekennzeichnet, daß der Wechselspannungsgenerator (3, Fig. 11) durch ein vom zentralen Steuer- und Auswertegerät (4, Fig. 11) erzeugtes Signal (5, Fig. 11) fortlaufend in seiner Frequenz verändert wird, wobei die sich unter der Frequenz verändernde Sensorspannung (6, Fig. 11) vom Mikroprozessor eingelesen wird und mit dem in einem Speicherbaustein (9, Fig. 11) gespeicherten Werten verglichen wird, wobei bei Identität das Programm über den Ausgang (10, Fig. 11) eine Information nicht nur über den Pegel sondern auch über die Art des Gases herausgibt.

22. Sensor nach einem oder mehreren der vorhergehenden Ansprüche mit einem Halbleiterelement, das auf einem elektrisch und thermisch isolierenden Träger (18, Fig. 15 und 16) aufgebracht ist und mittels einer elektrischen Heizung auf eine Betriebstemperatur aufgeheizt wird, dadurch gekennzeichnet, daß das Halbleitersensorelement (14, Fig. 13 bis 16) selbst als Heizung ausgebildet ist.

23. Sensor nach Anspruch 22, dadurch gekennzeichnet, daß die elektrische Heizung an einen Leistungsregler (12, Fig. 13 und 14) angeschlossen ist, der unabhängig vom Sensorwiderstand die frei wählbare Soll-Betriebstemperatur des Sensorelementes (14, Fig. 13 bis 16) konstant hält.

24. Sensor nach den Ansprüchen 22 und 23, dadurch gekennzeichnet, daß zwischen dem Sensorelement (14, Fig. 13 bis 16) und dem Leistungsregler (12, Fig. 13 und 14) über eine elektrische Verbindung (26, Fig. 13 und 14) ein Signal für die Auswerteeinheit (16, Fig. 13 und 14) abgegriffen wird.

Fig.1

Fig.2

Fig.3

EP 0 354 486 A2

T[K]

T1

T2

T3

t

T1 : Vorbereitungsphase
T2 : Meßphase
T3 : Ausheizphase

EP 0 354 486 A2

Fig. 5

+

5

11

12

4

6

13

14

10

15

7

8  9  9a

4  : Sensorelement
5  : Sensor - Spannung
6  : Heizungsregler
7  : Ref.-Umschalter
8  : Referenzheizwert zu T1
9  : Referenzheizwert zu T2
9a : Referenzheizwert zu T3
10 : Integr. Temperaturfühler
11 : Heizung im Sensorelement
12 : Sensorwiderstand
13 : Auswerteeinrichtung
14 : Meßausgang
15 : Taktgeber

Fig.6

Fig. 7

Fig. 8

Fig. 9

Fig. 10

Fig.11

Fig.12

Fig.13

Fig. 14

Fig. 15

Fig. 16